# EUROPEAN PATENT APPLICATION

(11) **EP 1 561 827 A1**
(43) Date of publication of application: **10.08.2005**
(21) Application number: 04100459.9
(22) Date of filing: 06.02.2004
(51) Int. Cl.: C21D 9/50, C21D 7/04, B23K 20/12, B23K 37/00, B23K 9/23, B23K 26/00

(54) **Method of welding a ferritic steel comprising a post weld heat treatment and cold working on the weld**

(71) Applicant: Alstom Technology Ltd, 5400 Baden (CH)
(72) Inventor: Nougaret, Max, Alexandre, 95200, Sarcelles (FR)

(57) **Abstract**

In a method according to the invention two steel components, which may be ferritic-martensitic or ferritic-bainitic, are welded together using a suitable filler material, a post weld heat treatment is performed at a temperature such that no significant softening of the steels occurs. Following the post weld heat treatment, the weld and heat affected zones are shot peened, rolled, or hammered. By this method a weld is achieved with reduced risk of mechanical deformation due to softening even at the most highly stressed location and reduced risk of fracture such as brittle or fatigue fracture. The method is applicable to a weld of similar or dissimilar steels.

## Description

### Field of Invention

The invention pertains to a method of welding similar and dissimilar ferritic-martensitic or ferritic-bainitic steel components, and in particular to a method of welding directed at reducing the effective tensile stress in the resulting weld and thereby increasing the lifetime of the welded component.

### Background Art

When two ferritic-martensitic or ferritic-bainitic steel components are welded together, a heat affected zone results on each side adjacent to the molten weld pool. After completion of the weld the heat affected zone cools rapidly and the materials in these zones transform into martensite or bainite. While the martensite or bainite has a high hardness and strength, it has a poor toughness and impact energy, which results in an increased probability of brittle fracture of the welded components. In addition, residual tensile stresses are induced in the surface of the weld zone as it is the last zone to solidify and cool.
In order to reduce the risk of brittle fracture, a post weld heat treatment is performed on the weld region at a temperature selected for a tempering of the martensite or bainite microstructure and precipitation of carbides. The tempering effects a reduction of the hardness and strength of the heat affected zone to levels closer to those of the material outside of the heat affected zone along with an increase in toughness, which reduces the risk of brittle fracture. Also, residual tensile stresses are reduced to a value below the yield strength at the post weld heat treatment temperature.

However, the temperature of the post weld heat treatment required for a reduction of the residual stress level and hardness of some steels is so high that a softening of the (base) material occurs. The resulting strength of the softened (base) material may be insufficient for a component in operation and mechanical deformation and potential failure of the welded component can result. On the other hand, if a lower temperature for the post weld heat treatment is chosen in order to prevent a softening of the (base) material and assure a sufficient strength for safe operation of the component, then high hardness and residual tensile stresses may still remain. Residual tensile stresses further reduce the lifetime of a component that is exposed to additional stresses during its operation. Therefore, the temperature for the post weld heat treatment is selected in a compromise between the resulting strength and toughness of the materials (as a higher temperature causes too much of a decrease in strength and a lower temperature causes an insufficient increase in toughness).

In the case of a weld of two dissimilar ferritic-martensitic or ferritic-bainitic steel components, the selection of a post weld heat treatment temperature is a compromise between the optimised temperature for the one steel and the optimised temperature for the other steel. However, a choice of a given temperature frequently leads to excessive residual tensile stresses in some part of the welded joint, in particular in the higher alloyed steel.
To date, this problem is solved by a multi-stage process. First, the steel component that requires the higher post weld heat treatment (PWHT) temperature is prepared by the application of an overlay or butter weld of material, followed by a PWHT at a temperature appropriate for that steel. Second, the buttered material is welded to the second steel that requires a lower post weld heat treatment temperature using a filler metal that requires a PWHT temperature between the PWHT temperature of the buttered steel and that of the second steel. Finally, a PWHT is applied appropriate for the second steel. Since the PWHT temperature for the second steel is lower than that of the buttering layer, the PWHT results in only a small reduction of the hardness in this weld consisting of a first and second steel with buttering layer.

A further method for heat treatment of welds of two dissimilar metals is disclosed in US 5,407,497 comprising several cycles of heat treatments including a heat treatment at a temperature appropriate for the first material followed by a reduction of the temperature to below 100°C and a heat treatment at a temperature appropriate for the second material.

It is the object of the invention to provide an efficient method of welding and post weld heat treating similar and dissimilar ferritic-martensitic or ferritic-bainitic steel components that reduces tensile stresses (in view of reducing the risk of component failure) and that prevents a significant softening of the base materials of the components.

### Summary of Invention

Two components are welded together by a known conventional method using a weld material and a post weld heat treatment is performed on the weld. According to the invention, the post weld heat treatment is performed at a temperature that is sufficiently low such that no significant softening of the materials of the components occurs. Following the post weld heat treatment, the heat affected zones and the weld zone are treated by cold working such as rolling, shot peening, or hammering. The weld zone is here the zone beyond the heat affected zones, where tensile stresses are present.

The ferritic-martensitic or ferritic-bainitic steel materials to be welded each have a characteristic post weld heat treatment temperature. A post weld heat treatment above this characteristic temperature effects a significant softening of the material. If the post weld heat treatment temperature is chosen below that characteristic temperature, no significant softening occurs as a result of the treatment but a high residual hardness and a low toughness remain in parts of the heat affected zone. The rolling, shot peening or hammering induces compressive stresses into the surface of the welded components thereby reversing the residual tensile stresses and effecting a zone with compressive stresses at the surface.

By this method, a weld is achieved that has a reduced risk of mechanical deformation due to softening even at the most highly stressed location and a reduced risk of brittle fracture or fatigue fracture.
A weld with compressive stresses is not able to develop cracks as a result of low or high cycle fatigue or corrosion fatigue. Low cycle fatigue is encountered, for example, in start and stop cycles of a turbo machine. High cycle fatigue is found for example in connection with rotation bending of a turbine rotor. Corrosion may enhance fatigue if an aggressive environment is present.

In a first variant of the method, the two ferritic-martensitic or ferritic-bainitic steel components comprise the same or similar steels and are welded together with a suitable weld filler material. The two steels have either the exact same composition or they both belong to a family of similar steels. The steels of this family are similar in the sense that the characteristic temperature that effects a significant softening as a result of a post weld heat treatment is essentially the same for all of the steels of this family. The post weld heat treatment for a weld of same or similar steels is performed at a temperature below the characteristic temperature for the steels of that family such that no significant softening of the base material of the components occurs.

In a second variant of the method, the two components to be welded each comprise ferritic-martensitic or ferritic-bainitic steels that are dissimilar where each steel belongs to a different family of steels. The steel of the first component belongs to a first family of steels, which all essentially have the same characteristic temperature that would effect a softening in post weld heat treatment. The steel of the second component belongs to a second family of steels, which all essentially have the same characteristic temperature within that family. However, the characteristic temperature of the steels of the second family is different from the characteristic temperature of the steels of the first family. The two components are welded together with a weld filler material selected such that after welding and PWHT a satisfactory combination of strength and toughness is achieved. The post weld heat treatment is performed at a temperature that is below the characteristic temperature of each of the two steel families, that would effect a significant softening in post weld heat treatment.
The shot peening, rolling, or hammering is performed in same manner in both variants of the method.

Methods of welding for several particular families of steels and post weld heat treatment at specific temperatures are disclosed in the dependent claims.

The method of welding according to the invention is suitably applied to the welding of rotors and rotor parts for steam and gas turbines. Further suitable applications are in the welding of other steam power plant components such as pipes connected to casings.

### Brief Description of the Figures

Figure 1 shows two ferritic-martensitic or ferritic-bainitic steel components welded together.
Figure 2 shows a diagram illustrating the hardness of the ferritic-martensitic or ferritic-bainitic steel of two components that are welded together as it appears prior to (bold line) and following (dashed line) the post weld heat treatment.
Figure 3 shows a diagram illustrating the residual stress distribution close to a weld of ferritic-martensitic or ferritic-bainitic steels following a shot peening, rolling, or hammering treatment.

### Detailed Description of the Invention

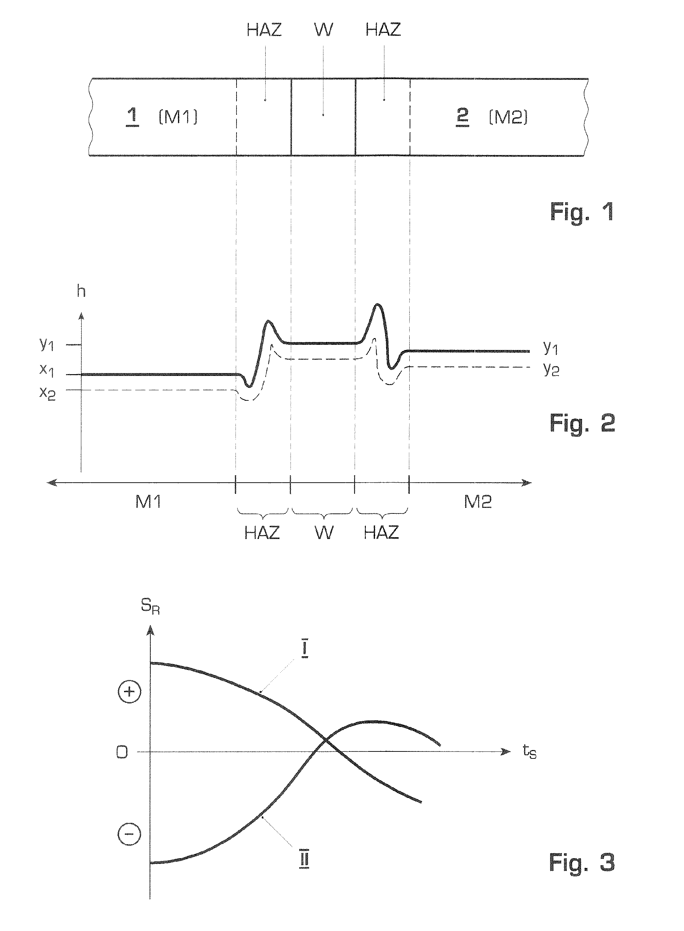

The figures show aspects of the welding method according to the invention for two welded components having dissimilar ferritic-martensitic or ferritic-bainitic steels. In figure 1 a first component 1 having a first ferritic-martensitic or ferritic-bainitic steel M1 and a second component 2 having a second ferritic-martensitic or ferritic-bainitic steel M2 are shown welded together with a weld metal W. The region of the weld is shown enlarged for the purpose of demonstration. To either side of the weld metal W, a heat affected zone HAZ is indicated by broken lines. The steels M1 and M2 have an increased hardness as a result of cooling following welding. The profile of the hardness h of the materials about the weld after the cooling is depicted in Figure 2 along a direction perpendicular to the welded joint. Prior to post weld heat treatment the hardness h is at a level x₁ in the region of the first steel M1. The hardness is sharply increased in the first heat affected zone HAZ as a result of the cooling following the welding. The hardness of the weld filler material W is typically higher than in the base materials. In the second heat affected zone of the second steel M2 the hardness is again sharply increased. Beyond that region it is at a level y₁ according to the steel M2 chosen there.
According to the invention, the heat affected zone is post weld heat treated at a temperature selected in order to temper and reduce the hardness. The temperature is selected in a range below the characteristic temperatures for steels M1 and M2, at which a PWHT would effect a significant softening of the steel.

A welded component that has been tempered at a temperature such that no significant softening has occurred has sufficient strength so that it generally satisfies the minimum requirements of the material delivery specification.

A PWHT at such temperature effects a reduction of the hardness in all treated regions as indicated by the dashed line in figure 2. The hardness h of the steel M1 is reduced to a level x₂ and that of steel M2 to a level y₂.

The heat affected zones and weld zone having residual tensile stresses are shot peened, rolled, or hammered. For example, the weld zone on a rotor of a turbine is typically 2 cm beyond the location with highest hardness in the heat affected zone. Shot peening is performed by known methods such as the directing of a jet of gas, for example air, that contains hard particles such as steel shot. The jet is directed at the surface of the component where compressive stresses are desired. Rolling is performed by moving the component, for example rotating, and pressing a small rotatable roller against the surface, where compressive stresses are to be produced. Hammering may be performed by manual or automated processes. Compressive stresses are induced to a level as high as the yield strength of the material at the surface. The compressive stresses induced decrease with distance from the surface. Typically they diminish at a depth of approximately 0.5 mm. Below a certain depth the stresses are tensile.

Figure 3 shows an example of the effect of rolling, shot peening, or hammering on the stresses S_{R} present in the welded component as a function of the depth t_{S} from its surface. Curve I shows the stresses prior to the rolling, shot peening, or hammering and indicates in particular the residual tensile stresses (+) near the surface. Curve II shows the compressive stresses (-) as a result of the rolling, shot peening, or hammering. Tensile stresses at a certain depth from the surface, for example at a depth of 1 mm, have no consequence on the quality and lifetime of the component since cracks develop essentially at the surface of the component.

For the case of two components welded together having similar or same materials, the diagrams of figures 2 and 3 apply in principle, the hardness levels x₁ and y₁, and x₂ and y₂ being the same.

In the following, examples of steels to be welded using the method according to the invention and appropriate PWHT temperatures are given.

In a first example of the method according to the invention, the steels M1 and M2 of the first and second components are same or similar. That is, they belong to the same family of steels and in particular have essentially the same characteristic temperature for PWHT, at which significant softening occurs in PWHT. One family of similar steels includes steels comprising approximately 1-3% Ni and approximately 2% Cr. The approximate contents in percent are to be understood as the percent value ± 0.2%, where this precision corresponds to the manufacturing variability. These steels are typically used for low temperature, low pressure steam turbine rotor applications and are characterised by high toughness and low creep strength. For this family of steels the characteristic temperature at which significant softening occurs is about 610°C.

An appropriate PWHT temperature for these steels that effects a tempering of the heat affected zone without significant softening is approximately 590°C. The approximate PWHT temperature of 590°C is preferably chosen within a range of 590°C ± 10°C. The post weld heat treatment is performed over a period of approximately ten hours.

In a second example of the method according to the invention, the steels M1 and M2 of the first and second components are same or similar, each belonging to a family of steels including 3.5% Ni-steels and 2.5-3.5% Ni steels alloyed with Vanadium.

An appropriate PWHT temperature for these steels and applied in the method according to the invention is approximately 620°C± 10°C. For this family of steels the characteristic temperature at which significant softening occurs is about 640°C.

In a third example of the method according to the invention, the steels M1 and M2 of the first and second components are same or similar and belong to a family of similar steels including 8-13%Cr steels and 1-2%Cr steels alloyed with either V and Mo, or with V and Mo and W, or with V and W.
The 8-13%Cr steels are typically used in steam turbines temperature above 540°C, and the Cr alloyed steels are typically applied in steam turbines up to ca. 540°C. This family of steels is typically used in intermediate and high pressure steam turbines. An appropriate PWHT temperature for these steels that effects a tempering of the heat affected zone without significant softening is approximately 670°C, where the PWHT temperature is preferably chosen within a range of 670°C ± 10°C. The PWHT is performed over a period of approximately ten hours. For this family of steels the characteristic temperature at which significant softening occurs is about 690°C.

In further examples of the invention, the two components comprise steels that are dissimilar, where the first and second steel each belong to any of the three families mentioned above. For the combination of the two steels the appropriate temperature for the PWHT, where no significant softening occurs, is in each case the lower temperature of the two suitable temperatures.
For all the examples of welds, cold working is performed as described above.

### Terms used in the Figures

- 1: first component
- 2: second component
- w: weld material
- M1: first steel of first component
- M2: second steel of second component
- HAZ: heat affected zone

## Claims

1. Method of welding a first component (1) comprising a first ferritic-martensitic steel or ferritic-bainitic steel (M1) to a second component (2) comprising a second ferritic-martensitic steel or ferritic-bainitic steel (M2) using a filler material (W) whereby heat affected zones (HAZ) are formed in the first and the second component (1, 2) and a post weld heat treatment is performed on the weld, and there is a first characteristic temperature that effects a significant softening of the first steel (M1) as a result of the post weld heat treatment and there is second characteristic temperature that effects a significant softening of the second steel (M2) as a result of the post weld heat treatment
**characterised in that**
the post weld heat treatment is performed at a temperature that is below the first and second characteristic temperature, and following the post weld heat treatment a cold working is performed on the weld.

2. Method according to claim 1
**characterised in that that** the cold working is a rolling, shot peening or hammering

3. Method according to claim 1
**characterised in that** the first steel (M1) and the second steel (M2) are same or similar and belong to a family of ferritic-martensitic steels, which have essentially the same characteristic temperature that effects a significant softening of the steels as a result of a post weld heat treatment, and the post weld heat treatment is performed at a temperature that is below the characteristic temperature for the steels of this family.

4. Method according to claim 1
**characterised in that** the first steel (M1) and the second steel (M2) are dissimilar and the first steel belongs to a first family of steels and the second steel belongs to a second family of steels, and where the steels of each family have essentially the same characteristic temperature that effects a significant softening of the steels as a result of a post weld heat treatment and the characteristic temperature of the steels of the first family is different from the characteristic temperature of the steels of the second family, and the post weld heat treatment is performed at a temperature that is below the characteristic temperature of the first and second steel (M1, M2)

5. Method according to claim 2
**characterised in that**
the first steel (M1) and the second steel (M2) each belong to a family of steels each comprising approximately 1-3% Ni and approximately 2% Cr, and the post weld heat treatment is performed at a temperature of approximately 590°C, preferably within the range of 580 to 600°C

6. Method according to claim 2
**characterised in that**
the first steel (M1) and the second steel (M2) each belong to a family of steels including 3.5% Ni-steels and 2.5-3.5% Ni steels alloyed with Vanadium and the post weld heat treatment is performed at a temperature of approximately 620°C, preferably within the range of 610 to 630°C.

7. Method according to claim 2
**characterised in that**
the first steel (M1) and the second steel (M2) each belong to a family of steels including 8-13%Cr steels and 1-2%Cr steels alloyed with either V and Mo, or with V and W, or with Mo and V and W, and the post weld heat treatment is performed at a temperature of approximately 670°C, preferably within the range of 660 to 680°C.

8. Method according to claim 3
**characterised in that**
the first steel (M1) belongs to a family of steels each comprising approximately 1-3 % Ni and approximately 2% Cr, and the second steel (M2) belongs to a family of steels including 3.5% Ni-steels and 2.5-3.5% Ni steels alloyed with V, and the post weld heat treatment is performed at a temperature of approximately 590°C, preferably within the range of 580 to 600°C.

9. Method according to claim 3
**characterised in that**
the first steel (M1) belongs to a family of steels including 3.5% Ni-steels and 2.5-3.5% Ni steels alloyed with V, and the second steel (M2) belongs to a family of steels including 8-13%Cr steels and 1-2%Cr steels alloyed with either V and Mo, or with V and W, or with Mo and V and W, and the post weld heat treatment is performed at a temperature of approximately 620°C, preferably within the range of 610 to 630°C.

10. Method according to claim 3
**characterised in that**
the first steel (M1) belongs to a family of steels each comprising comprising approximately 1-3 % Ni and approximately 2% Cr, and the second steel (M2) belongs to a family of steels including 8-13%Cr and 1-2%Cr steels alloyed with either V and Mo, or with V and W, or with Mo and V and W, and the post weld heat treatment is performed at a temperature of approximately 590°C, preferably within the range of 580 to 600°C.

11. Method according to claim 1
**characterised in that**
the shot peening or rolling is performed over a spatial extent of at least 2 cm to each side of a maximum hardness location in the heat affected zone.

12. Method according to one of the foregoing claims
**characterised in that**
the first and second components (1,2) are rotors or rotor parts.

13. Method according to claim 1, 2 or 3
**characterised in that**
the first and second components (1,2) are components in steam power plants such as pipes connected to casings.
